# EUROPEAN PATENT APPLICATION

(11) **EP 3 617 051 A1**
(43) Date of publication of application: **04.03.2020**
(21) Application number: 19181834.3
(22) Date of filing: 21.06.2019
(51) Int. Cl.: B62K 3/00

(54) **ELECTRIC SCOOTER**

(30) Priority: 30.08.2018 CN 201821419783 U
(71) Applicant: NINEBOT (BEIJING) TECH. CO., LTD., Beijing 100192 (CN)
(72) Inventor: CHEN, Zhongyuan, Beijing, 100192 (CN); YUAN, Yubin, Beijing, 100192 (CN); HOU, Zhu, Beijing, 100192 (CN); WANG, Feiteng, Beijing, 100192 (CN)
(74) Representative: Regimbeau

(57) **Abstract**

An electric scooter comprises a front wheel, a footboard and a rear wheel successively connected to one another. At least one of the front wheel and the rear wheel is connected to a driving device, the electric scooter comprises a stepping region disposed on the footboard and an acceleration control region located in the front of the stepping region. The acceleration control region is provided with a sensing component for sensing an acceleration signal from an operator. The sensing component is configured to send the acceleration signal to the driving device which in turn drives the front wheel or the rear wheel to accelerate. The acceleration signal comprises at least one of the value of pressure applied on the footboard or the value of a distance from the sensing component to the operator.

## Description

### TECHNICAL FIELD

The present invention relates to the technical field of scooters, and in particular to an electric scooter.

### BACKGROUND

An electric scooter cannot only be used as a type of sports equipment for people's relaxation and entertainment, but also be used as a convenient conveyance. Consequently, the electric scooter has been popular among people, and its utilization becomes increasingly prevailing.

In an existing electric scooter, acceleration is usually achieved by turning an accelerator handlebar. When the acceleration is required, an operator standing on a footboard turns the accelerator handlebar to achieve an acceleration control of the electric scooter. Although this acceleration manner achieves the acceleration control of the electric scooter, an effect of inertia force may force the operator to be tilted backward in a sudden acceleration, since his or her center of gravity is high when traveling by standing on the footboard. This may result in a disadvantageous phenomenon called "nose-up" (i.e., the front part of the electric scooter tilts upward) and put the operator at considerable risk.

### SUMMARY

An objective of the present invention is to provide an electric scooter, so as to solve the technical problem of "nose-up" easily caused by an acceleration of the electric scooter.

According to the present invention, an electric scooter is provided, which comprises a front wheel, a footboard and a rear wheel successively connected with one another from front to back. At least one of the front wheel and the rear wheel is connected to a driving device. The electric scooter comprises a stepping region disposed on the footboard and an acceleration control region located in the front of the stepping region. The acceleration control region is provided with a sensing component for sensing an acceleration signal from an operator. The sensing component is configured to send the acceleration signal to the driving device which in turn drives the front wheel or the rear wheel to accelerate.

The acceleration signal comprises at least one of a value of a pressure applied on the footboard or a value of a distance from the sensing component to the operator.

In at least one example, the sensing component comprises a pressure sensor for sensing for sensing the value of the pressure applied by an operator. The pressure sensor is mounted on the footboard and located at an end of the footboard adjacent to the front wheel.

In at least one example, the electric scooter further comprises a mount for fixing the pressure sensor. The mount is provided with a groove which matches a profile of the pressure sensor. The pressure sensor is placed in the groove.

The mount is detachably connected to the footboard.

In at least one example, the mount is connected to an upper surface of the footboard, and a pressure sensing surface of the pressure sensor faces upward.

In at least one example, the pressure sensor is fixed to the mount by bonding.

In at least one example, the sensing component comprises a distance sensor for sensing a distance from the distance sensor to the operator.

In at least one example, the electric scooter further comprises a crossbar, a vertical tube connected to the crossbar, and a front fork connected to the vertical tube. The front wheel is mounted on the front fork, and the vertical tube is connected to the footboard.

The distance sensor is mounted on the vertical tube.

In at least one example, the distance sensor is mounted on an upper half of the vertical tube.

In at least one example, the sensing component comprises a platen, an elastic member, and a displacement sensor for sensing a compression amount of the elastic member. The platen is rotatably connected to the footboard, the elastic member is connected between the platen and the footboard, and the displacement sensor is connected with a controller of the driving device.

In at least one example, the electric scooter further comprises a brake control region located behind the stepping region. A brake component is disposed in the brake control region. The brake component comprises a brake sensor for sensing a braking signal from an operator. The brake sensor is configured to send the braking signal to a controller of the driving device, so as to brake the electric scooter.

Advantageous effects that come with the electric scooter of the present invention lie in that:
when the operator travels forward on the electric scooter, the driving device drives a driving wheel to rotate, thereby implementing a normal driving of the electric scooter. When an acceleration is required, the operator applies a pressure to the sensing component located in the acceleration control region in the front of the stepping region, such that a value of the pressure applied to the footboard increases, and at this time, the sensing component send the sensed acceleration signal characterized by the pressure to the driving device. Then, the driving device drives the electric scooter to accelerate. In another example, the operator approaches the sensing component located in the acceleration control region, such that the distance between the operator and the sensing component is gradually decreased, and at this time, the sensing component sends the sensed acceleration signal characterized by the distance to the driving device. Then, the driving device drives the electric scooter to accelerate. In yet another example, the abovementioned two acceleration modes are activated simultaneously to implement acceleration, the basic process of this example is implemented by merging the abovementioned two independent processes, and thus will not be further described herein.

One the one hand, when the electric scooter starts accelerating, thanks to the fact that the sensing component is located in the front of the stepping region, the operator's weight is concentrated on the front of the footboard when he or she accelerates the electric scooter by increasing the pressure applied to the footboard, and thus the "nose-up" phenomenon is effectively inhibited since the operator's center of gravity moves forward. On the other hand, in the case where the operator accelerates the electric scooter by shortening the distance from the sensing component to him or her, the operator leans towards the front wheel and his or her center of gravity moves forward, which also well suppresses the "nose-up" phenomenon. Therefore, the electric scooter of the present invention overcomes the "nose-up" phenomenon due to the inertia force resulted from the acceleration of the existing electric scooter, guarantees reliable driving of the electric scooter, and remarkably improves its safety performance.

### BRIEF DESCRIPTION OF DRAWINGS

For the purpose of illustrating the technical solutions provided by examples of the present invention more definitely, the drawings used in the description of the examples will be presented briefly below. It is apparent that the drawings in the description below only show some examples of the present invention, and those skilled in the art may obtain other drawings according to these drawings without any creative work.
FIG. 1 is a structural diagram of an electric scooter provided by an example of the present invention.
FIG. 2 is a partial diagram of an electric scooter provided by an example of the present invention, in which a mounted structure of a pressure sensor on the footboard is represented in an exploded diagram;
FIG. 3 is a diagram of the operator standing on the electric scooter provided by an example of the present invention, in which dotted lines represent the operator's backward leaning state;
FIG. 4 is another diagram of the operator standing on the electric scooter provided by an example of the present invention, in which dotted lines represent the operator's forward leaning state ;
FIG. 5 is a diagram of the operator standing on another electric scooter provided by an example of the present invention;
FIG. 6 is a top partial diagram of the electric scooter illustrated in FIG. 5;
FIG. 7 is a partial diagram of yet another electric scooter provided by an example of the present invention;
FIG. 8 is a diagram of the operator standing on still another electric scooter provided by an example of the present invention.

### Reference Numerals

100-acceleration control region; 200-stepping region; 300-brake control region; 400-pressure sensor; 500-brake sensor; 600-mount; 700-distance sensor;
110-crossbar; 120-vertical tube; 130-front fork; 140-front wheel; 150-driving motor;
210-footboard; 220-battery;
211-fixing hole; 212-mounting groove; 213-engaging teeth;
310-bracket; 320-rear wheel; 330-mudguard;
331-friction member;
510-housing;
511-locking tongue;
G-operator's center of gravity;
LI-distance between operator's center of gravity and front wheel;
L2-distance between operator's center of gravity and rear wheel;
a-acceleration of electric scooter.

### DETAILED DESCRIPTION

The examples of the present invention will be further described in detail with the reference to the drawings. Reference is made in detail to exemplary aspects, examples of which are illustrated in the accompanying drawings. The following description refers to the accompanying drawings in which the same numerals in different drawings represent the same or similar elements unless otherwise indicated. The implementations set forth in the following description of exemplary aspects do not represent all implementations consistent with the present invention. Instead, they are merely examples of apparatuses and methods consistent with aspects related to the present invention.

It should be noted that, in the description of the present invention, orientations or positional relationships indicated by terms "upper", "lower", etc. are understood in relation to the orientations or positional relationships illustrated in the drawings, which are used merely for the convenience of describing the present invention and simplification of the description, and are not intended to indicate or imply that the device or element must have the particular orientations, or be constructed and operated in particular orientations, and thus cannot be understood as limitations to the present invention.

It should be noted that, in the description of the present invention, terms "connected", "mounted" and "coupled" should be understood broadly, for example, as fixedly connected, detachably connected, or integrally connected; mechanically connected, or electrically connected; directly connected, or indirectly connected via intermediate media; or internally connected between two elements, unless otherwise expressly stated and limited. For those skilled in the art, specific meanings of the terms above in the present invention can be understood on a case-by-case basis.

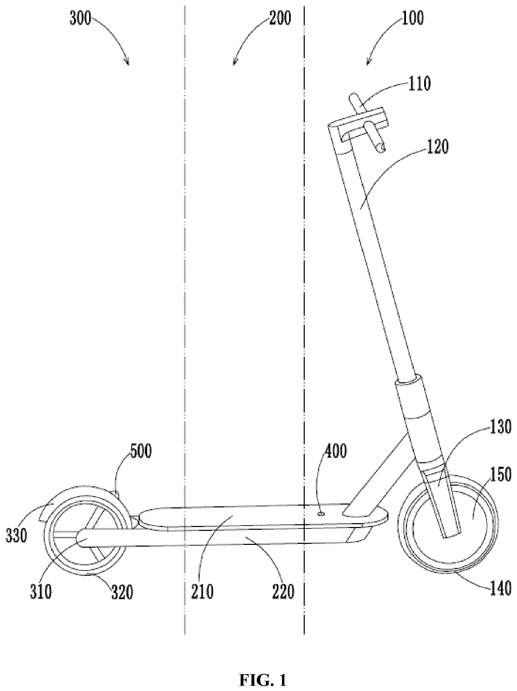

FIG. 1 is a structural diagram of an electric scooter provided by an example. As illustrated in FIG. 1, the example provides an electric scooter, including a front wheel 140, a footboard 210 and a rear wheel 320 successively connected to one another from front to back. Specifically, at least one of the front wheel 140 and the rear wheel 320 is connected to a driving device. Herein, the electric scooter comprises a stepping region 200 disposed on the footboard 210 and an acceleration control region 100 located in the front of the stepping region 200.

With reference to FIG. 1, in the present example, the acceleration control region 100 is provided with a sensing component for sensing an acceleration signal from an operator. Specifically, the sensing component may send the acceleration signal to the driving device, and the driving device in turn drives the front wheel 140 or the rear wheel 320 to accelerate, and thus causes the electric scooter to accelerate. Herein, the acceleration signal comprises: at least one of a value of a pressure applied to the footboard 210 or a value of a distance from the sensing component to the operator.

When the operator travels forward on the electric scooter, the driving device drives a driving wheel to rotate, thereby implementing a normal driving of the electric scooter. When an acceleration is required, the operator applies a pressure to the sensing components located in the acceleration control region 100 in the front of the stepping region 200, such that the value of pressure applied to the footboard 210 increases, and at this time, the sensing component sends the sensed acceleration signal characterized by the pressure to the driving device. Then the driving device drives the electric scooter to accelerate. In another example, the operator approaches the sensing component located in the acceleration control region, such that the distance between the operator and the sensing component is gradually decreased, and at this time, the sensing component sends the sensed acceleration signal characterized by the distance to the driving device. Then, the driving device drives the electric scooter to accelerate. In yet another example, the abovementioned two acceleration modes are activated simultaneously to implement acceleration, the basic process of this example is implemented by merging the abovementioned two independent processes, and thus will not be further described herein.

One the one hand, when the electric scooter starts accelerating, thanks to the fact that the sensing component is located in the front of the stepping region, the operator's weight is concentrated on the front of the footboard when he or she accelerates the electric scooter by increasing the pressure applied to the footboard, and thus the "nose-up" phenomenon is effectively inhibited since the operator's center of gravity moves forward. On the other hand, in the case where the operator accelerates the electric scooter by shortening the distance from the sensing component to him or her, the operator leans towards the front wheel and his or her center of gravity moves forward, which also well suppresses the "nose-up" phenomenon. Therefore, the electric scooter of the present invention overcomes the "nose-up" phenomenon due to the inertia force resulted from the acceleration of the existing electric scooter, guarantees reliable driving of the electric scooter, and remarkably improves its safety performance.

In the example, the driving device may comprise a driving member, a battery 220 and a controller. Specifically, the battery 220 supplies power to the driving member and the controller to allow a power input of the driving member to the driving wheel and a control functionality of the controller. Moreover, the sensing component is connected with the controller, and the controller is connected with the driving member, such that the sensing component may send the received signal to the controller, and thus the controller may send accordingly commands to the driving member.

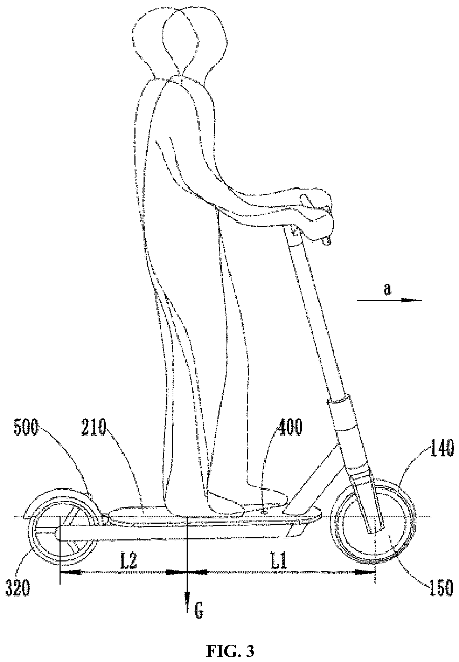

FIG. 3 is a diagram of the operator standing on the electric scooter according to an example (dotted lines represent the operator's backward leaning state). The acceleration principle of the electric scooter will be further described in the following in combination with FIG. 3.

As illustrated in FIG.3, the standing posture of the operator on the footboard 210 is as illustrated by solid lines in this figure. In the normal driving state of the electric scooter, the operator keeps in balance. In the related art, when the electric scooter suddenly accelerates forward with acceleration a, an upper body of the operator maintains the standing posture under the effect of inertia force, whereas the lower part follows an acceleration movement of the electric scooter, which causes the operator to be in a backward leaning tendency (illustrated in dotted lines in this figure) and thus causes the "nose-up" of the electric scooter. In the following, the electric scooter is taken as a studying object. When the "nose-up" occurs, the electric scooter tends to rotate counterclockwise around the rear wheel 320. The electric scooter is always under the effect of the operator's gravity during driving, that is, a clockwise downward moment (which is represented as M2=G^{∗}L2) is generated at the rear wheel 320 of the electric scooter so as to suppress the reclining of the electric scooter. However, in a state of sudden acceleration, the downward moment is not sufficient to suppress the reclining of the electric scooter. In the present invention, since the sensing component is disposed in the acceleration control region 100 in the front of the stepping region 200, it leads to a forward movement of the operator's center of gravity when he or she performs an acceleration operation, such that the length L2 is increased and thus the downward moment M2 is also increased. The downward moment M2 is able to weaken the reclining tendency at the rear wheel 320, and thus effectively inhibits the occurrence of the "nose-up" phenomenon.

With reference to FIG. 1, in the example, the sensing component may comprise a pressure sensor 400. Specifically, the pressure sensor 400 is mounted on the footboard 210 and located on an end of the footboard 210 adjacent to the front wheel 140. This arrangement enables the operator to easily touch the sensing component when the acceleration control of the electric scooter is required. Moreover, the pressure sensing is reliable and thus a reliability of acceleration control is ensured.

In the case that the pressure sensing is applied to implement the acceleration control, it should be noted that the acceleration control region refers to a section at the front side of the stepping region 200 of the footboard 210.

In the example, the pressure sensor 400 may be disposed at a right side of the footboard 210 in a width direction. This arrangement facilitates the utilization of most operators, and is more in conformity with the operator's engineering principle. It is apparent that the pressure sensor 400 may be also disposed at other positions, such as in the center of the footboard 210 in the width direction, or at left side of the footboard 210 in the width direction, as long as the acceleration control for the electric scooter may be achieved by applying the pressure. That is, the example does not constraint the specific positions of the pressure sensor 400 in the footboard 210 in the width direction.

Specifically, in the example, the pressure sensor 400 may be a pressure sensor using a strain gauge, a pressure resistance sensor, or a thin-film pressure sensor.

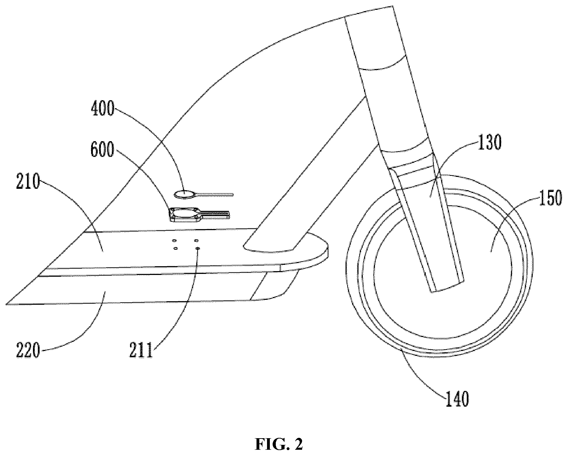

FIG. 2 is a partial view of an electric scooter according to an example (a mounting structure for a pressure sensor on the footboard is represented in an exploded diagram). As illustrated in FIG. 2, the electric scooter may further comprise a mount 600 for fixing the pressure sensor 400. Specifically, the mount 600 is provided with a groove that matches a profile of the pressure sensor 400. The pressure sensor 400 is placed in the groove. Moreover, the mount 600 is detachably connected on the footboard 210.

The arrangement of the mount 600 not only ensures a reliable installment of the pressure sensor 400 on the footboard 210, but also allows the protection for the pressure sensor 400 and prolongs service life of the pressure sensor 400. Moreover, a detachable connection manner between the mount 600 and the footboard 210 facilitates maintenance for the pressure sensor 400 by detaching it from the footboard 210, thereby facilitating post-maintenance of the electric scooter according to the example.

Specifically, in the example, the mount 600 may be connected to an upper surface of the footboard 210, and a pressure sensing surface of the pressure sensor 400 faces upward. This arrangement ensures a sufficient contact between the operator's feet and the pressure sensor 400, which enables the operator to accurately apply a pressure to the pressure sensor 400, thus guaranteeing an acceleration reliability of the electric scooter according the example.

Specifically, the upper surface of the footboard 210 is provided with multiple fixing holes 211, at which the mount 600 is connected through a threaded connector.

In the example, the pressure sensor 400 may be fixed to the mount 600 by bonding. This arrangement ensures connection reliability between the pressure sensor 400 and the mount 600, which not only reduces a risk of the pressure sensor 400 detaching from the mount 600, but also prevents a sliding of the pressure sensor 400, thereby guaranteeing an accuracy and sensitivity of the pressure sensing.

The arrangement of the pressure sensor 400 enables the operator to freely control the traveling speed according to actual requirements, which effectively improves the operating experience. Herein, the speed is controlled by the pressure sensing of the pressure sensor 400. The pressure sensing is continuous, and the stepping pressure applied by the operator corresponds to the continuous driving speed of the electric scooter.

It should be noted that in, the example, it may use the pressure sensor 400 to implement the acceleration control as described above, but the present invention is not limited thereto, and other configuration may be adopted. For example, a platen, an elastic member, and a displacement sensor for sensing a compression amount of the elastic member are provided. The platen is rotatably connected to the footboard 210, the elastic member is connected between the platen and the footboard 210, and the displacement sensor is connected to the controller. A magnitude of the pressure is indirectly sensed by sensing a displacement of the elastic member, thereby implementing the acceleration control. Specifically, the elastic member may be a spring.

It also should be noted that, in the example, the acceleration control of the electric scooter may be achieved by the sensing the pressure by means of the pressure sensor 400 as described above, but the present invention is not limited thereto, and other configuration may be adopted, for example, the acceleration control may be achieved by sensing the distance between the operator and the sensing component.

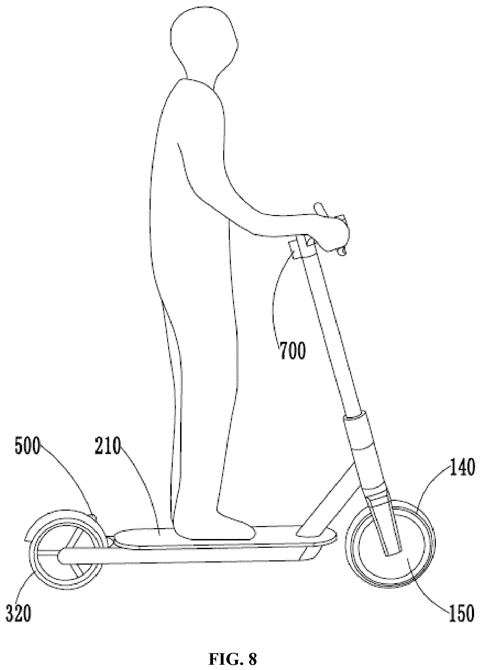

Specifically, with reference to FIG. 1 in combination with FIG. 8, in the example, the electric scooter may further comprise a crossbar 110, a vertical tube 120 connected to the crossbar 110, and a front fork 130 connected to the vertical tube 120, which are successively connected from top to bottom. The front wheel 140 is mounted on the front fork 130, and the vertical tube 120 is connected on the footboard. The distance sensor 700 may be mounted on the vertical tube 120.

In one example, the distance sensor 700 is mounted on an upper half of the vertical tube 120. This arrangement ensures that the distance measured by the distance sensor 700 is closer to the distance from the distance sensor 700 to the operator's center of gravity, thereby guaranteeing the reliability of the acceleration control.

Specifically, the distance sensor 700 may be mounted at any position on the upper half of the vertical tube 120, such as on the top end of the vertical tube 120 shown in FIG. 8. It is apparent that the distance sensor 700 may be mounted at another position on the upper half of the vertical tube 120, as long as the mounting position of the distance sensor 700 enables it to sense the distance between itself and the operator's center of gravity, and thus achieves the acceleration control of the electric scooter.

In the example, a distance range may be pre-set for the distance sensor 700. In the driving process of the electric scooter, when the distance between the operator and the distance sensor 700 is less than the distance range, the distance sensor 700 sends an acceleration signal to the controller to control the driving member to accelerate the electric scooter, so as to allow the acceleration of the electric scooter. Moreover, as the distance gradually decreases, the speed of the electric scooter gradually increases.

It is also possible that, once the operator stands on the footboard 210, the distance sensor 700 records current distance from the distance sensor to the operator as a reference. In the driving process of the electric scooter, when the distance between the operator and the distance sensor 700 is less than the reference, the distance sensor 700 sends an acceleration signal to the controller to control the driving member to accelerate the electric scooter, so as to allow the acceleration of the electric scooter. Moreover, as the distance gradually decreases, the speed of the electric scooter gradually increases.

Specifically, in the example, the distance sensor 700 may be a laser sensor.

In the case that the distance sensing is adopted to implement the acceleration control, it should be noted that the acceleration control region refers to a region where the vertical tube 120 is located.

It should be noted that in an actual application process, it is possible to activate merely an acceleration mode of the electric scooter using the pressure sensor 400 for the acceleration control, and it is also possible to activate merely an acceleration mode of the electric scooter using the distance sensor 700 for the acceleration control, and it is still possible to activate both of these two operation modes.

Furthermore, in the example, the arrangement of the vertical tube 120 and the crossbar 110 above the front wheel 140 enables the operator to control a direction of the electric scooter by hand, which improves the safety of the electric scooter.

With reference to FIG. 1, in the example, the electric scooter may further comprise a brake component which may slow the electric scooter to a stop. This arrangement allows the brake of the electric scooter, and further improves the safety performance of the electric scooter in the example.

With reference to FIG. 1, in the example, the electric scooter may further comprise a brake control region 300 located behind the stepping region 200. Specifically, the brake component is disposed in the brake control region 300. This arrangement causes a backward movement of the operator's center of gravity when he or she needs to brake the electric scooter. Consequently, the operator's weight is concentrated at the rear portion of the body of the electric scooter, which effectively suppressing the "forward tumble" phenomenon in the braking process, reduces a risk that the operator tumbles forward from the electric scooter, and further improves the safety performance of the electric scooter according to the example.

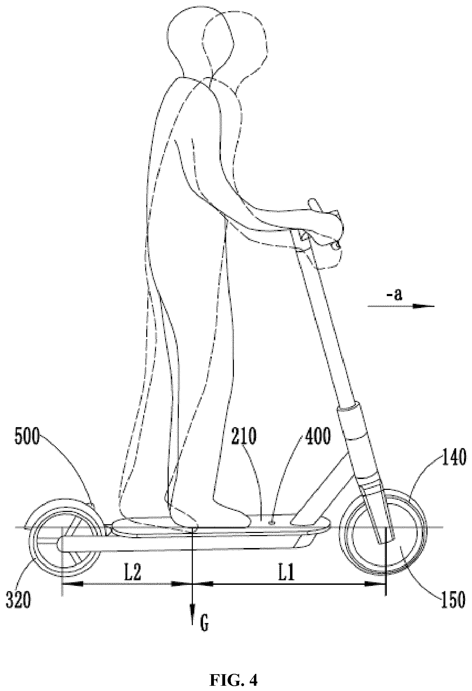

FIG. 4 is another diagram of the operator standing on the electric scooter according to an example (dotted lines represent the operator's forward leaning state). The brake principle of the electric scooter will be further described hereafter in combination with FIG. 4.

As illustrated in FIG.4, the standing posture of the operator on the footboard 210 is as illustrated by solid lines in this figure. In the normal driving state of the electric scooter, the operator keeps in balance. In the related art, when the electric scooter suddenly brakes with acceleration a, an upper body of the operator maintains the standing posture under the effect of inertia force, whereas a lower part follows the brake of the electric scooter, which causes the operator to be in a forward leaning tendency (illustrated in dotted lines in this figure), and thus causes "forward tumble" of the electric scooter. In the following, the electric scooter is taken as a studying object. When the "forward tumble" occurs, the electric scooter tends to rotate clockwise around the front wheel 140. The electric scooter is always under the effect of the gravity of the operator during driving, that is, a counterclockwise downward moment (which is represented as M1=G^{∗}L1) is generated at the front wheel 140 of the electric scooter. However, in a state of sudden brake, the downward moment is not sufficient to suppress the forward tumble of the electric scooter. In the present invention, the braking component is disposed in the brake control region 300 in the rear portion the stepping region 200, which leads to a backward movement of the operator's the center of gravity when performs a brake operation, such that the length L1 is increased and thus the downward moment M1 is also increased. The downward moment M1 is able to weaken the forward tumble tendency at the front wheel 140, and thus effectively inhibits the occurrence of the "forward tumble" phenomenon.

Specifically, in the example, the braking component may comprise a brake sensor 500 disposed in the brake control region 300, the brake sensor 500 is for sensing a braking signal from an operator and is connected to the controller. When the operator needs to brake the electric scooter, his or her center of gravity moves backward, and he or she steps on the brake sensor 500 at the rear portion the body of the electric scooter. At this time, the brake sensor 500 sends a brake signal to the controller, and the controller in turn controls the driving member to stop running, so as to allow the braking of the electric scooter.

In the example, the brake sensor 500 may also be in the form of a sensor that acquires a pressure signal to allow the braking.

With reference to FIG. 1, FIG. 3 and FIG. 4, in the example, the electric scooter may also comprise a mudguard 330 located above the rear wheel 320. Specifically, the mudguard 330 is fixedly connected to the footboard 210, and the brake sensor 500 is mounted on the mudguard 330.

When the operator needs to brake the electric scooter, he or she only needs to lift one foot and step on the brake sensor 500 located on the mudguard 330, which is easy to operate and convenient to control.

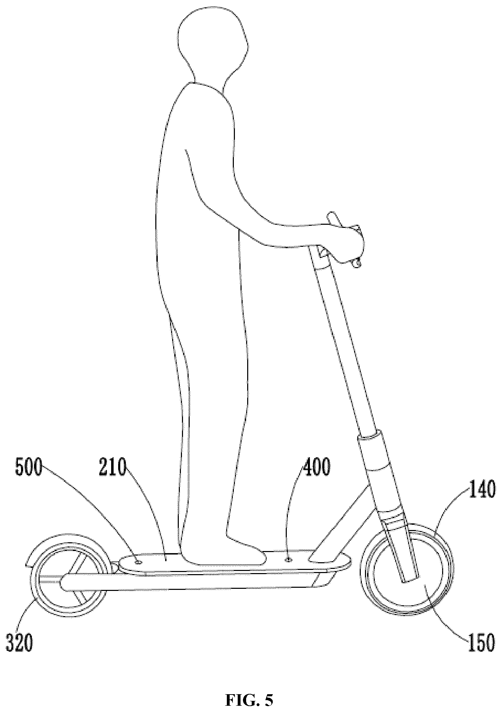

It should be noted that, in the example, the brake sensor 500 may be in a form of the abovementioned structure that is mounted on the fixed mudguard 330, but the present is not limited thereto, and other arrangement may also be adopted, for example, the brake sensor is mounted on the footboard 210, as illustrated in FIG. 5. It is apparent that the brake sensor 500 may also be mounted on the lateral side of the bracket 310. Therefore, the arrangement of the brake sensor 500 may be in any suitable form, as long as the brake sensor 500 is mounted in the brake control region 300 at the rear portion the stepping region 200 so as to achieve the brake of the electric scooter by the backward movement of the center of gravity in the braking process. That is, the example does not limit the specific mounting position of the brake sensor 500.

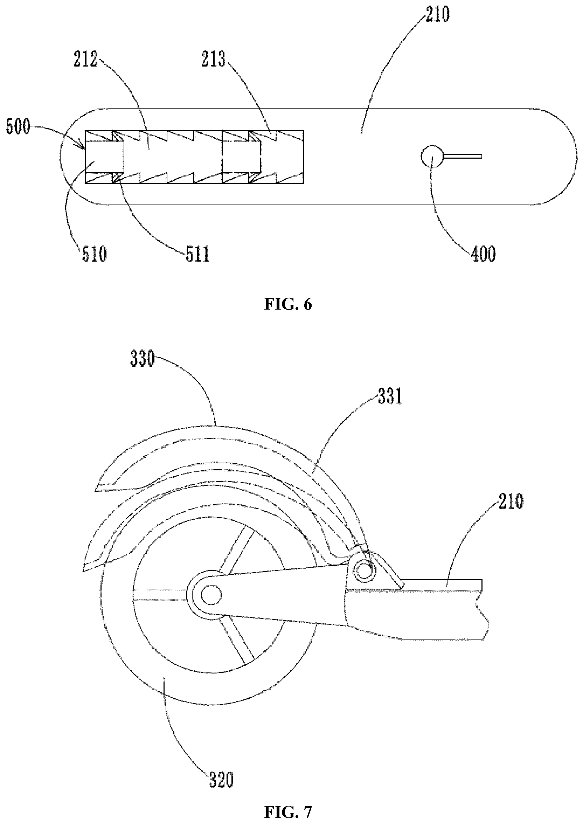

As illustrated in FIG. 6, when the brake sensor 500 is mounted on the footboard 210, a mounting groove 212 is provided on the upper surface of the footboard 210. The length of the mounting groove 212 extends along the length of the footboard 210. A continuous engaging teeth structure 213 is provided on the side wall of the mounting groove 212. In the meanwhile, a housing 510 for enclosing the brake sensor 500 is provided, and locking tongues 511 are disposed on both sides of the housing 510. The locking tongue 511 is outwardly expanded in a normal state, and is retracted inward when a lateral pressure is applied. Moreover, the housing 510 is provided with a lead hole for passing a signal line of the brake sensor 500 and connecting the signal line to the controller. With reference to FIG. 6, the position of the brake sensor 500 may be adjusted according to the operator's height and body before the operator uses the electric scooter. A specific adjustment process is described as follows: the housing 510 is pushed from left to right; at this time, the locking tongues 511 on both sides of the housing 510 are retracted toward their center due to the pressing of the inclined surface of the engaging teeth 213, and slide along the inclined surface of the engaging teeth 213; when the locking tongues slide to a position between two adjacent engaging teeth 213, they are clamped on the transverse faces of the engaging teeth 213 to complete the position adjustment. When the brake sensor 500 is moved to the rightmost end, it may be lifted up vertically and placed again at a suitable sensing position.

This modular arrangement for the sensor allows for free adjustment of the position of the brake sensor 500, which meets various requirements of different operators, improves generalization to a large extent, and further improves operating experiences.

In the example, a cover layer may also be disposed on the footboard 210. Specifically, the cover layer may be a transparent material. The cover layer plays an important role in protecting the pressure sensor 400 and the brake sensor 500 disposed on the footboard 210, and may reduce a disadvantageous effect caused by dust and impurities, and meanwhile, guarantees the dryness of working environment of the sensor. Therefore, the cover layer may effectively prolong the service life of the sensor. Moreover, the arrangement of the transparent cover layer enables the operator to visually observe the position where each sensor is disposed, thereby guaranteeing timeliness of control.

It is apparent that the mounting structure for the brake sensor 500 mounted on the footboard 210 may be the same as the mounting structure for the pressure sensor 400 mounted on the footboard 210. Likewise, the mounting structure for the brake sensor 500 mounted on the mudguard may also be the same as the mounting structure for the pressure sensor 400 mounted on the footboard 210. Thus, the detailed descriptions are omitted here.

It should be noted that, in the example, the brake sensor 500 may be a sensor described above that allows the brake control by sensing the operator's pressure, but the present invention is not limited thereto. The other configuration may be adopted, for example, the brake control may be achieved by sensing the distance from the sensor to the operator, and the principle and operating process are the same as that of the distance sensor 700 which is used to implement the objective of acceleration by sensing a distance value, and thus its descriptions are omitted here.

With reference to FIG.1, in the example, the front wheel 140 may be a driving wheel and the rear wheel 320 may be a driven wheel. Specifically, the driving member comprises a driving motor 150 which is mounted in a hub of the front wheel 140 for driving its rotation. When the brake sensor 500 is used to implement brake of the electric scooter, the braking principle is to gradually lower the rotational speed of the driving motor 150 to stop the front wheel 140 and thus achieve the brake.

It should be noted that in the example, the brake of the electric scooter may be implemented as described above by setting the brake sensor 500 to lower the rotational speed of the driving motor 150, but the present invention is not limited thereto. The other configuration may be adopted, for example, the brake is achieved by friction. Specifically, as illustrated in FIG. 7, the mudguard 330 is rotatably connected to the footboard 210, and the rotating joint between the mudguard 330 and the footboard 210 is further provided with a torsion spring. The brake member comprises a friction member 331 disposed on one side of the mudguard 330 facing towards the rear wheel 320. One arm of the torsion spring is fixedly connected to the mudguard 330, and the other arm of the torsion spring is fixedly connected to the footboard 210. When the operator needs to brake the electric scooter, he or she steps on the mudguard 330 to cause it to rotate towards the rear wheel 320 until the friction member 331 is in contact with the rear wheel 320, and thus the brake is achieved by a contact friction between friction member 331 and the rear wheel 320. In this process, the operator's center of gravity moves backward, and thus the forward tumble phenomenon caused by the sudden brake is effectively prevented.

Specifically, the friction member 331 may be in the form of a sheet, and its shape may be configured according to a profile of the rear wheel 320. This arrangement increases a contact area between the friction member 331 and the rear wheel 320, thereby increasing a friction force therebewteen and guaranteeing braking efficiency of the electric scooter.

Furthermore, except the manner that the brake of the electric scooter is achieved by using the brake sensor 500 to gradually stop the driving motor 150 or by using the contact friction between the friction member 331 and the rear wheel 320 as described above, other configuration may be adopted to achieve the brake. For example, the brake of the electric scooter is achieved by disposing a disc-brake on the rear wheel 320, and disposing a handbrake for controlling the disc-brake on the crossbar 110.

With reference to FIG. 1, in the example, the electric scooter may further comprise a front fork 130 connected to the vertical tube 120. The front wheel 140 is mounted on the front fork 130. Moreover, in the example, the battery 220 may be mounted under the footboard 210.

In the example, the controller may be mounted under the footboard 210. This arrangement shortens the length of the electrical leads between the controller and each component connected to the controller, avoids an unreliable control caused by the winding of the electrical leads to some extent, and thus further improves operating reliability of the electric scooter of the examples.

It should be understood that the present invention is not limited to the specific structures described above and shown in drawings, and may be modified and changed without departing from the scope thereof.

## Claims

1. An electric scooter, **characterized in that** the electric scooter comprises a front wheel (140), a footboard (210) and a rear wheel (320) successively connected with one another, wherein at least one of the front wheel (140) and the rear wheel (320) is connected to a driving device, the electric scooter comprising a stepping region (200) disposed on the footboard (210) and an acceleration control region (100) located in the front of the stepping region (200), the acceleration control region (100) being provided with an sensing component for sensing an acceleration signal from an operator, the sensing component being configured to send the acceleration signal to the driving device which in turn drives the front wheel (140) or the rear wheel (320) to accelerate; and
the acceleration signal comprises at least one of a value of a pressure applied on the footboard (210) or a value of a distance from the sensing component to the operator.

2. The electric scooter of claim 1, wherein the sensing component comprises a pressure sensor (400) for sensing the value of the pressure applied by the operator, the pressure sensor (400) being mounted on the footboard (210) and located at an end of the footboard (210) adjacent to the front wheel (140).

3. The electric scooter of claim 2, wherein the electric scooter further comprises a mount (600) for fixing the pressure sensor (400), wherein the mount (600) is provided with a groove which matches a profile of the pressure sensor (400), the pressure sensor (400) being placed in the groove; and
the mount (600) is detachably connected to the footboard (210).

4. The electric scooter of claim 3, wherein the mount (600) is connected to an upper surface of the footboard (210), and a pressure sensing surface of the pressure sensor (400) faces upward.

5. The electric scooter of claim 3, wherein the pressure sensor (400) is fixed to the mount (600) by bonding.

6. The electric scooter of claim 1, wherein the sensing component comprises a distance sensor (700) for sensing a distance from the distance sensor to the operator.

7. The electric scooter of claim 6, wherein the electric scooter further comprises a crossbar (110), a vertical tube (120) connected to the crossbar (110), and a front fork (130) connected to the vertical tube (120), wherein the front wheel (140) is mounted on the front fork (130), and the vertical tube (120) being connected to the footboard (210); and
the distance sensor (700) is mounted on the vertical tube (120).

8. The electric scooter of claim 7, wherein the distance sensor (700) is mounted at an upper half of the vertical tube (120).

9. The electric scooter of claim 1, wherein the sensing component comprises a platen, an elastic member, and a displacement sensor for sensing a compression amount of the elastic member, the platen being rotatably connected to the footboard (210), the elastic member being connected between the platen and the footboard (210), and the displacement sensor being connected to a controller of the driving device.

10. The electric scooter of claim 1, wherein the electric scooter further comprises a brake control region (300) located behind the stepping region (200), a brake component being disposed in the brake control region (300), the brake component comprising a brake sensor (500) for sensing a braking signal from an operator, the brake sensor being configured to send the braking signal to a controller of the driving device, to brake the electric scooter.
